# EUROPÄISCHE PATENTANMELDUNG

(11) **EP 4 498 346 A2**
(43) Veröffentlichungstag der Anmeldung: **29.01.2025**
(21) Anmeldenummer: 24181984.6
(22) Anmeldetag: 13.06.2024
(51) Int. Cl.: G08B 29/18, B60R 25/30, B60R 25/31

(54) **VERFAHREN UND VORRICHTUNG ZUR DETEKTION UND PRÄVENTION VON DIEBSTAHL UND SCHÄDEN AN EINEM OBJEKT, UND VERFAHREN ZUM ERZEUGEN EINES DETEKTIONSBEREICHS EINES SENSORS**

(30) Priorität: 13.07.2023 DE 102023118507
(71) Anmelder: KONVOI GmbH, 21079 Hamburg (DE)
(72) Erfinder: Jagielo, Alexander, 21079 Hamburg (DE); Luckhardt, Heinz, 21079 Hamburg (DE)
(74) Vertreter: RGTH

(57) **Zusammenfassung**

Ein Verfahren zur Detektion und Prävention von Diebstahl und Schäden an einem Objekt, insbesondere an einem Fahrzeug, wird vorgeschlagen, wobei das Verfahren die folgenden Schritte umfasst: (S10) Erkennen eines Zielobjekts innerhalb eines Detektionsbereichs durch mindestens einen Sensor; (S20) Erfassen von Zielobjektdaten; (S30) Übermitteln der Zielobjektdaten an eine Steuereinheit; (S40) Durchführen einer Risikoklassifikation anhand der Zielobjektdaten mittels eines ersten künstliche-Intelligenz (KI)-Modells; und (S50) Ansteuern eines Alarmsystems gemäß der Risikoklassifikation des Zielobjekts. Ferner betrifft die Erfindung eine Vorrichtung zur Detektion und Prävention von Diebstahl und Schäden an einem Objekt, insbesondre an einem Fahrzeug, sowie ein Verfahren zum Erzeugen eines Detektionsbereichs eines Sensors.

## Beschreibung

### Technisches Gebiet

Die Erfindung betrifft ein Verfahren und eine Vorrichtung zur Detektion und Prävention von Diebstahl und Schäden an einem Objekt, insbesondre an einem Fahrzeug, sowie ein Verfahren zum Erzeugen eines Detektionsbereichs eines Sensors.

### Stand der Technik

Überwachungssysteme zur Detektion und Prävention von Diebstahl und Schäden an einem Objekt sowie sensorgestützte Systeme zur Erkennung einer Annäherung zum Objekt sind aus dem Stand der Technik bekannt. Diese Standardüberwachungssysteme erzielen in der Regel keine abschreckende, präventive Wirkung, wodurch in der Regel ein Schaden am Objekt entsteht. Ferner beschränken sich die Standardüberwachungssysteme auf einen akustischen Alarm. Die fehlende Unterscheidung der Annäherungen führt zu einer erhöhten Quote an Fehlalarmen.

### Darstellung der Erfindung: Aufgabe, Lösung, Vorteile

Aufgabe der vorliegenden Erfindung ist es, ein Verfahren und eine Vorrichtung zur Detektion und Prävention von Diebstahl und Schäden an einem Objekt, insbesondre an einem Fahrzeug, derart zu verbessern, dass ein präziser Diebstahlschutz und eine jederzeitige Verfügbarkeit des Diebstahlschutzes an jedem Ort angeboten werden können.

Erfindungsgemäß wird hierfür ein Verfahren zur Detektion und Prävention von Diebstahl und Schäden an einem Objekt, insbesondere an einem Fahrzeug, vorgeschlagen, wobei das Verfahren die folgenden Schritte umfasst:
(S10) Erkennen eines Zielobjekts innerhalb eines Detektionsbereichs durch mindestens einen Sensor;
(S20) Erfassen von Zielobjektdaten;
(S30) Übermitteln der Zielobjektdaten an eine Steuereinheit;
(S40) Durchführen einer Risikoklassifikation anhand der Zielobjektdaten mittels eines ersten künstliche-Intelligenz (KI)-Modells; und
(S50) Ansteuern eines Alarmsystems gemäß der Risikoklassifikation des Zielobjekts.

Das Objekt ist das mit dem erfindungsgemäßen Verfahren zu überwachende Objekt, welches jede Art von unbeweglichem oder beweglichem Objekt, beispielsweise eine Immobilie, eine Fläche, eine Jacht, ein Transporter, ein LKW oder ein PKW usw. sein kann.

Unter den Begriff "Zielobjekt" ist ein unerwünschtes Objekt, insbesondere ein sich bewegendes Objekt, noch bevorzugterweise eine sich bewegende oder annähernde Person, die von dem mindestens einem Sensor erfasst wird, zu verstehen. Insbesondere ist unter dem "Zielobjekt" ein sich dem überwachenden Objekt annäherndes Objekt zu verstehen.

Der Detektionsbereich kann durch eine Distanz, einen vertikalen sowie einen horizontalen Öffnungswinkel zum Objekt charakterisiert werden. Die Abdeckung des Detektionsbereich ist von der Anzahl und der Anordnung der Sensoren an dem Objekt abhängig. Bewegungen und Annäherungen des Zielobjekts werden innerhalb des Detektionsbereichs bevorzugterweise durch den mindestens einen Sensor am Objekt kontinuierlich verfolgt und in Echtzeit erkannt.

Vorzugweise ist die Steuereinheit eine zentrale Steuereinheit. Sämtliche Schritte des erfindungsgemäßen Verfahrens werden vorteilhafterweise ausschließlich auf der zentralen Steuereinheit durchgeführt. Die Steuereinheit kann ferner direkt im Objekt, insbesondre im Fahrzeug, vorgesehen beziehungsweise angebracht sein.

Das erste KI-Modell weist bevorzugterweise ein maschinelles Lernmodell und/oder ein neuronales Netz und/oder einen Algorithmus auf. Es läuft bevorzugterweise auf der Steuereinheit. Dies hat den Vorteil, dass auch bei fehlender Internetverbindung das erfindungsgemäße Verfahren funktioniert. Das erste KI-Modell kann auch mehrere Kl-Modelle beinhalten, die jeweils für unterschiedliche Funktionen, wie z.B. für die Zielobjekterkennung, die Risikoklassifikation oder die Ansteuerung des Alarmsystems, ausgebildet sind.

Bei der Risikoklassifikation wird vorzugsweise die Gefahrstufe des Zielobjekts in verschiedene Kategorien eingeteilt, oder mit unterschiedlichen Faktoren versehen, um passenden Präventionsmaßnahmen bei dem Alarmsystem einzuleiten.

Vorzugsweise umfasst das Verfahren, vor dem Schritt "(S10) Erkennen eines Zielobjekts innerhalb eines Detektionsbereichs", weiter:
(S11) Bestimmen eines Installationsorts des Sensors;
(S12) Kalibrieren und/oder konfigurieren des Sensors;
(S13) Anordnen des Sensors an dem Objekt; und
(S14) Erzeugen des Detektionsbereichs um das Objekt.

Bevorzugterweise ist der mindestens eine Sensor ein Radarsensor und/oder ein optischer Sensor und/oder ein akustischer Sensor und/oder ein Beschleunigungssensor. Noch vorzugsweise kann der Sensor zur Erfassung von Vibrationen, Schock, Temperatur, Licht, Position oder Akustik dienen. Mit der erweiterten Datenerfassung können weitere Abweichungen erfasst werden, wie z.B. Beschädigungen oder Unfälle des Objekts, insbesondre des Fahrzeugs.

Zusätzlich weist der Schritt "(S11) Bestimmen eines Installationsorts des Sensors" vorzugsweise die folgenden Schritte auf:
Der Installationsort kann vorteilhaftweise durch Erprobung ermittelt (5111) werden. Dabei wird auch vorzugsweise eine Software eingesetzt. Der Installationsort wird beispielweise nach der Ermittlung (5111) in der Software eingegeben bzw. erfasst, um Messungen für einen leistungsstarken Installationsort durchzuführen (S112). Somit kann die Software für die an verschiedenen Installationsorten angewendeten Sensoren angepasst werden und ferner können die Sensoren an verschiedenen Installationsorten mit optimalen und installationsortabhängigen Konfigurationen, die durch die Software verbessert werden, genutzt werden.

Unter dem Schritt "(S112) Durchführen von Messungen für einen leistungsstarken Installationsort" ist zu verstehen, dass vorzugsweise nach der Ermittlung (S111) des Installationsortes die Leistung des Sensors, wie z.B. die Reichweite und/oder die Genauigkeit der Detektion des Zielobjekts, gemessen wird.

Bevorzugterweise kann die Software dann auch mit dem ersten und/oder einem untengenannten zweiten KI-Modell erweitert werden. Nach dem Schritt "(S112) Durchführen von Messungen für einen leistungsstarken Installationsort" erfolgt vorzugsweise ein Training (S113) des KI-Modells für eine zuverlässige Klassifikation des Zielobjekts, insbesondere ein Training des KI-Modells für eine zuverlässige Klassifikation von Menschen.

Vorzugsweise werden mindestens drei Sensoren jeweils an drei fixen Installationsorten an einem Teil des Objekts angeordnet. Im Fall, dass das Objekt ein Fahrzeug ist, werden diese an einem hinteren Teil des Fahrzeugs, insbesondre des LKW-Aufliegers, befestigt. Dadurch wird der Detektionsbereich entlang einer Längsseite des Objekts, beziehungsweise an den hinteren Türen des Fahrzeugs erzeugt. So werden Bewegungen des Zielobjekts in dem Detektionsbereich durch die Sensoren kontinuierlich verfolgt und Annäherungen in Echtzeit erkannt. Der Detektionsbereich kann einen Bereich mit einer Entfernung von mindestens 50 m, bevorzugt 20 m, insbesondre bevorzugt 10 m von dem Objekt aufweisen.

Ferner kann der Sensor mithilfe Programmierung auf den Installationsort konfiguriert werden. Durch das Konfigurieren des Sensors wird vorteilhafterweise die Genauigkeit des Sensors erhöht. Beispielweise werden die Radarwellen bei dem Radarsensor konfiguriert, sodass die Zuverlässigkeit und Genauigkeit der Erkennung eines Zielobjekts gesteigert werden können. Außerdem wird die Reichweite des Radarsensors erhöht. Ferner kann eine fälschliche Erkennung von irrelevanten Zielobjekten (z.B. Fahrzeugen, Reflexionen, Regen, etc.) reduziert werden. Dadurch kann eine zuverlässige Detektion von relevanten Zielobjekten gewährleistet und die Quote an Fehlalarmen reduziert werden.

Vorzugsweise weisen die Zielobjektdaten, die zur ständigen Risikoklassifizierung herangezogen werden, die folgenden Parameter auf:
- ein Vorhandensein des Zielobjekts, und/oder,
- eine Position des Zielobjekts, und/oder
- eine Geschwindigkeit des Zielobjekts, und/oder
- eine Bewegungsrichtung des Zielobjekts, und/oder
- eine Anzahl des Zielobjekts, und/oder
- eine Größe des Zielobjekts, und/oder
- ein Verhalten (z.B. die Schrittbewegung, ausgestreckte Arme, usw.) des Zielobjekts, und/oder
- ein Stand des Zielobjekts, und/oder
- eine Tageszeit, und/oder
- und/oder ein Vorhandensein eines auffälligen Gegenstandes an dem Zielobjekt.

Des Weiteren ist bevorzugterweise auf der Steuereinheit das erste KI-Modelle für die Zielobjekterkennung, und/oder die Risikoklassifikation und/oder die Ansteuerung des Alarmsystems integriert. Dabei kann das erste KI-Modell mindestens einen der folgenden Algorithmen aufweisen und wird bevorzugterweise zunehmend mittels maschinellen Lernens trainiert:
- der Zielobjekterkennungsalgorithmus;
- der Risikoklassifikationsalgorithmus: mithilfe der Zielobjektdaten findet vorzugsweise die Risikoklassifikation des Zielobjektes statt, sodass nur das relevante Zielobjekt berücksichtigt wird; und
- der Steuerungsalgorithmus: auf Basis des berechneten Risikos wird über die passende Maßnahme entschieden, um das Zielobjekt abzuschrecken oder im Gefahrenfall eine externe Meldestelle zu alarmieren.

Eine stetige Überwachung des Objekts durch das erste KI-Modell, insbesondre den Risikoklassifikationsalgorithmus, ist bevorzugt, welche stets die richtigen abschreckenden Maßnahmen ausführt, je nach dem real-time berechneten Risiko, d.h. der Gefahrenstufe des Zielobjekts, bevor bereits Schaden am Objekt entsteht. Der Algorithmus kann abhängig von dem Anwendungsbereich und dem eingesetzten Sensor erweitert werden.

Bevorzugterweise ist auf dem Sensor ein zweites KI-Modell für die Erkennung des Zielobjekts integriert. Das zweite KI-Modell weist bevorzugterweise auch ein maschinelles Lernmodell und/oder ein neuronales Netz und/oder einen Algorithmus auf. Der Algorithmus im zweiten KI-Modell kann der Zielobjekterkennungsalgorithmus sein, der weiterhin eine genaue Detektion vom Zielobjekt ermöglicht und bevorzugterweise auch mit maschinellem Lernen trainiert wird.

Noch bevorzugt können weitere KI-Modelle auf der Steuereinheit und/oder auf dem Sensor integriert werden. Die weiteren KI-Modelle können die Daten aus dem GPS-Empfänger, Beschleunigungssensor, LTE-Modul und/oder einer Energiemanagementeinheit auf das Objekt (z.B. Spannungen auf der Stromquelle des Objekts) auswerten.

Beispielweise können die weitere KI-Modelle, basierend auf der Auswertung der Daten von Beschleunigung, Geschwindigkeit, und/oder GPS-Ortung des Objekts, ein Objektzustand (Fähre, Zug, Straße) identifizieren.

Insbesondere können die weiteren KI-Modelle, basierend auf der Auswertung der Beschleunigung- und/oder GPS-Daten, eine oder mehrere der unten genannten Vorgänge durchfuhren:
a) Identifizierung des Beladungszustands des Objekts, z.B. ob das Objekt geladen wird und/oder wie viel wurde in dem Objekt geladen;
b) Alarmierung von Standzeiten des Objekts;
c) Messung von Dauer von Beladungs- /Entladungsvorgängen;
d) Identifizierung/Dokumentation von Straßenverläufen mit suboptimalen Bedingungen (z.B. beim Servertransport) oder von Orten mit erhöhtem Beschädigungspotenzial (Kuppelwerte); Dadurch können diesen Straßen/Orte vermieden werden;
e) Überprüfung, ob Kuppelvorgang erfolgreich war oder eine Abfahrtkontrolle gemacht wurde; und
f) Erkennung von unbefugtem Eindringen in das Objekt.

Durch die Messung können die weiteren KI-Modelle die Auswertung von Prozesskosten (z.B. Strafzahlungen, Parkgebühren usw.) durchführen, sodass die Einsparpotenziale für die Prozesskosten erkennt werden können. Ferner können die weiteren KI-Modelle die Produktivität einzelner Standorte oder Terminals basierend auf Beladungszeiten, und/oder Verweildauer usw. des Objekts ermitteln.

Des Weiteren umfasst das Verfahren vorzugsweise die folgenden Schritte:
(S60) Hochladen der Zielobjektdaten über ein Kommunikationsmodul (40) in eine Cloud; und
(S70) Trainieren das erste und/oder zweiten Kl-Modells mittels der Zielobjektdaten.

Im Fall, dass das Objekt ein Fahrzeug sein sollte, können zusätzlich Daten zu einem Risiko im Straßenverkehr, insbesondre auf Parkplätzen, vorzugsweise mittels des Radarsensors und GPS-Empfängers gesammelt werden. Diese Daten können den Benutzer für weitere Anwendungen zur Verfügung gestellt werden, wie z.B. eine strategische Routenplanung zur Nutzung sicherer Transportwege, und/oder eine digitale Plombe: das bedeutet, ein Reporting kann erstellt werden, in dem die Unversehrtheit des durch das erfindungsgemäße Verfahren gesicherten Fahrzeuges bestätigt werden kann. War der Fahrzeug keinem Risiko ausgesetzt und gab es keine Annäherungen, kann nachgewiesen werden, dass der Transport sicher durchgeführt und die Ladung nicht beeinträchtigt wurde.

Vorzugsweise weist das Alarmsystem ein Leuchtsignal und/oder einen akustischen Alarm und/oder eine Kamera auf, und wobei das Ansteuern (S50) des Alarmsystems gemäß der Risikoklassifikation des Zielobjekts die folgenden weiteren Schritte umfasst:
(S51) Einschalten des Leuchtsignals und/oder des akustischen Alarms und/oder der Kamera; und/oder
(S52) Senden einer Benachrichtigung an eine externe Stelle.

Das Leichtsignal kann ein Licht sein. Die Kamera ist vorzugsweise zur Überwachung des Nahfeldes um das Objekt an diesem installiert, um das Training des ersten und/oder zweiten KI-Modell, insbesondere der Risikoklassifikationsalgorithmus, zu unterstützen. Im Alarmfall können Fotos oder Videos zur späteren Nachverfolgung von der Kamera aufgenommen werden. Zusätzlich oder alternativerweise kann das Alarmsystem eine externe Stelle, wie z.B. den Benutzer, einen Sicherheitsdienst, usw., mit der Benachrichtigung alarmieren.

Neben den Benachrichtigungen kann ebenfalls ein Reporting erzeugt werden, welches die Risikosituationen und Hinweise für den Benutzer zur Verbesserung der Situation des Objekts durch die Wahl anderer Prozesse, Routen oder Sicherheitsmaßnahmen darstellt.

Erfindungsgemäß ist ferner eine Vorrichtung zur Detektion und Prävention von Diebstahl und Schäden an einem Objekt, insbesondre an einem Fahrzeug, vorgesehen, welche Folgende aufweist:
- Mindesten einen Sensor, der konfiguriert ist, ein Zielobjekt innerhalb eines Detektionsbereichs zu erkennen und Zielobjektdaten zu erfassen;
- eine Steuereinheit, die konfiguriert ist, die Zielobjektdaten zu empfangen und mittels eines ersten KI-Modells eine Risikoklassifikation durchzuführen; und
- ein Alarmsystem, das gemäß der Risikoklassifikation des Zielobjekts von der Steuereinheit angesteuert wird.

Das erst KI-Modell weist bevorzugterweise ein maschinelles Lernmodell und/oder ein neuronales Netz und/oder ein Algorithmus auf und läuft bevorzugterweise auf der Steuereinheit. Das erst KI-Modell kann auch mehrere KI-Modelle umfassen, die jeweils für unterschiedlichen Funktionen, wie z.B. für die Zielobjekterkennung, die Risikoklassifikation oder die Ansteuerung des Alarmsystems, ausgebildet sind. Dabei kann das erste KI-Modell mindestens einen der obigen Algorithmen, d.h. den Zielobjekterkennungsalgorithmus, den Risikoklassifikationsalgorithmus und den Steuerungsalgorithmus, aufweisen.

Vorzugsweise ist auf der Steuereinheit das erste KI-Modell für die Zielobjekterkennung, und/oder die Risikoklassifikation und/oder die Ansteuerung des Alarmsystems integriert.

Des Weiteren ist bevorzugterweise der Sensor ein Radarsensor und/oder ein optischer Sensor und/oder ein akustischer Sensor und/oder ein Beschleunigungssensor. Bevorzugterweise ist auf dem Sensor ein zweites KI-Modell für die Erkennung des Zielobjekts integriert. Das zweite KI-Modell weist bevorzugterweise ein maschinelles Lernmodell und/oder ein neuronales Netz und/oder einen Algorithmus auf. Der Algorithmus des zweiten KI-Modells kann ein Zielobjekterkennungsalgorithmus sein. Das erste und/oder zweite KI-Modell wird bevorzugterweise zunehmend mittels maschinellen Lernens trainiert.

Vorteilhafterweise kann das Alarmsystem und die Steuereinheit dieselbe Elektronik sein. Jedoch greifen jeweils verschiedene Algorithmen auf das Alarmsystem und auf der Steuereinheit.

Bevorzugterweise umfasst die Vorrichtung eine eigene Stromversorgung, insbesondere eine Batterie oder einen Akku. Dies hat den Vorteil, dass die erfindungsgemäße Vorrichtung auch bei fehlender externer Stromversorgung weiter betrieben werden kann.

Noch bevorzugt kann die Vorrichtung mehrere Stromquellen zur Stromversorgung kombinieren. Beispielweise können mindestens zwei Stromquellen am Objekt, insbesondere am Fahrzeug vorgesehen werden, wobei eine Stromquelle davon eine Photovoltaikanlage sein kann.

Darüber hinaus kann die Stromversorgung durch eine intelligente Energiemanagementeinheit gesteuert werden. Auf der intelligenten Energiemanagementeinheit ist vorzugsweise ein KI-Modell oder ein Allegorithmus integriert. Abhängig von der Tageszeit, vom Standort und/oder vom Batterieladestand, entscheidet die intelligente Energiemanagementeinheit, welche Sensoren (Radar-, GPS-, und/oder Beschleunigungssensor) einzuschalten sind, um eine möglichst effiziente Stromversorgung und einen sicheren und unterbrechungsfreien Betrieb der Vorrichtung zu jeder Zeit zu gewährleisten.

Die Steuerung der Energiemanagementeinheit wird mit zunehmenden Datenmengen aus dem realen Stromversorgungsbetrieb verbessert, beispielweise werden die Daten zur Steuerung der Energiemanagementeinheit in eine Cloud zum Training des Kl-Modells oder des Algorithmus hochgeladen. Die Energiemanagementeinheit kann nach dem Training des KI-Modells über die Cloud aktualisiert werden.

Ferner weist die Vorrichtung vorzugsweise ein Kommunikationsmodul auf, über das die Zielobjektdaten in eine Cloud zum Training des KI-Modells hochgeladen werden. Noch vorteilhafterweise können sämtliche Daten zu den mehreren Vorrichtungen, die von verschiedenen Benutzern in unterschiedlichen Orten benutzt werden, und Daten zu detektieren Risiko um mehrere Objekte in die Cloud hochgeladen werden. Unter dem Begriff "Daten zu den mehreren Vorrichtungen" ist zu verstehen, dass diese Daten beispielweise Telematikdaten, wie z.B. GPS-Position, und/oder Geschwindigkeit des zu überwachenden Objekts, aufweisen. Des Weiteren kann die "Daten zu detektieren Risiko" das Verhalten und/oder die berechneten Risiken und/oder die Reaktionen mehrerer Zielobjekte auf verschiedene abschreckende Maßnahmen aufweisen. Dadurch kann das erste und oder zweite KI-Modell anhand der obengenannten verschiedenen Daten weiter trainiert und optimiert werden.

Konnte eine Optimierung des Kl-Modells erfolgreich erreicht werden, erhalten bevorzugterweise sämtliche Vorrichtungen über eine drahtlose Verbindung das neue KI-Modell. Erfahrungen und Optimierungen einer einzelnen Vorrichtung werden vorzugsweise allen Benutzern zur Verfügung gestellt. Dadurch, dass die Vorrichtungen durch Ausweitung des Netzes / Systems verbessert werden, da jede Vorrichtung durch das kontinuierliche Lernen jeder anderen Vorrichtung (auch an anderen Objekten) profitiert. Somit wird das erfindungsgemäße Verfahren zur Detektion und Prävention von Diebstahl und Schäden an dem Objekt zunehmend zuverlässiger.

Erfindungsgemäß wird hierfür ein Verfahren zum Erzeugen eines Detektionsbereichs um ein Objekt, insbesondere um ein Fahrzeug, eines Sensors vorgeschlagen, wobei der Sensor vorzugsweise ein Radarsensor ist. Das Verfahren umfasst:
(S11) Bestimmen eines Installationsorts am Objekt des Sensors;
(S12) Kalibrieren und/oder konfigurieren des Sensors;
(S13) Befestigen des Sensors an dem Objekt; und
(S14) Erzeugen des Detektionsbereichs um das Objekt.

Des Weiteren ist erfindungsgemäß ein Prozessor vorgesehen, der konfiguriert ist, um ein Verfahren zur Detektion und Prävention von Diebstahl und Schäden an einem Objekt, insbesondre an einem Fahrzeug, durchzuführen, welches Folgendes umfasst:
(S10) Erkennen eines Zielobjekts innerhalb eines Detektionsbereichs durch mindestens einen Sensor;
(S20) Erfassen von Zielobjektdaten;
(S30) Übermitteln der Zielobjektdaten an eine Steuereinheit;
(S40) Durchführen einer Risikoklassifikation anhand der Zielobjektdaten mittels eines ersten KI-Modells; und
(S50) Ansteuern eines Alarmsystems gemäß der Risikoklassifikation des Zielobjekts.

### Kurze Beschreibung der Figuren

Die Erfindung wird anhand der beigefügten Figuren beispielhaft erläutert. Es zeigen:
Fig. 1: eine Prinzipdarstellung der einzelnen Verfahrensschritte für ein Verfahren zur Detektion und Prävention von Diebstahl und Schäden an einem Objekt,
Fig. 2: eine Vorrichtung zur Detektion und Prävention von Diebstahl und Schäden an einem Objekt, und
Fig. 3: eine Prinzipdarstellung der einzelnen Verfahrensschritte für ein Verfahren zum Erzeugen eines Detektionsbereichs eines Sensors um ein Objekt.

### Ausführliche Beschreibung der Figuren

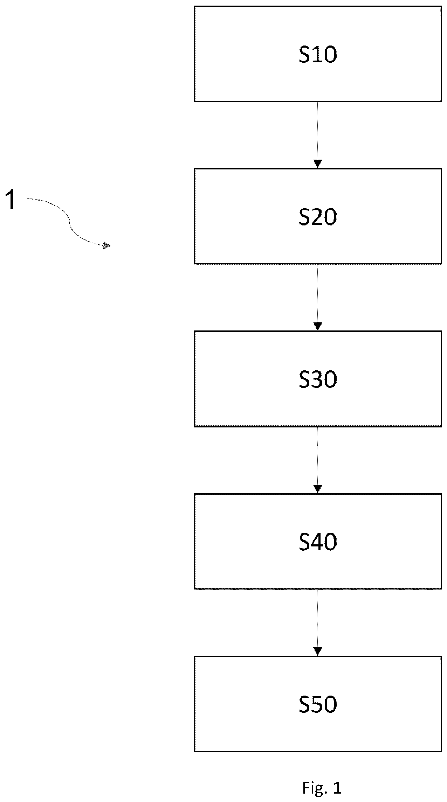

In Fig. 1 sind die einzelnen Schritte für ein Verfahren 1 zur Detektion und Prävention von Diebstahl und Schäden an einem Objekt 100 abgebildet. Dabei wird ein Zielobjekt 200 innerhalb eines Detektionsbereichs 110 durch mindestens einen Sensor 10 erkannt. Zielobjektdaten werden erfasst und an eine Steuereinheit 20 übermittelt. Im nächsten Schritt wird eine Risikoklassifikation anhand der Zielobjektdaten mittels eines ersten künstliche-Intelligenz (KI)-Modells durchgeführt. Gemäß der Risikoklassifikation des Zielobjekts 200 wird ein Alarmsystem 30 angesteuert.

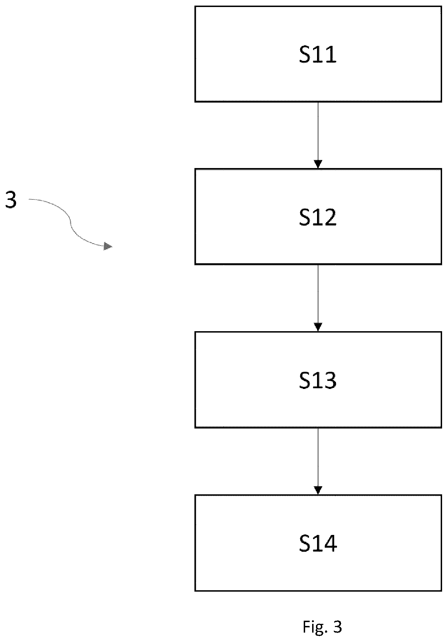

Wie in Fig. 3 beispielhaft gezeigt, wird vor dem Schritt "Erkennen eines Zielobjekts 200 innerhalb eines Detektionsbereichs 110" noch das Verfahren 3 zum Erzeugen eines Detektionsbereichs 110 eines Sensors 10 um ein Objekt 100 durchgeführt. Zuerst wird ein Installationsort des Sensors 10 bestimmt. Der Sensor 10 wird danach kalibriert und konfiguriert, um die Genauigkeit zu erhöhen. Zuletzt wird der Sensor 10 gemäß des berechneten Installationsorts an dem Objekt 100 angeordnet, wodurch ein Detektionsbereich 110 um das Objekt 100 erzeugt wird.

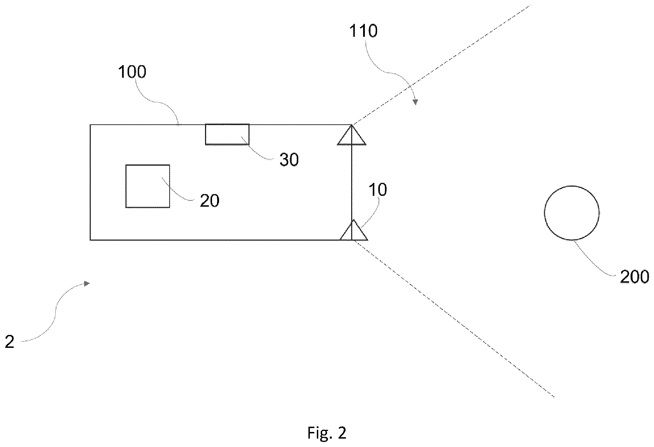

In Fig. 2 ist die Vorrichtung 2 zur Detektion und Prävention von Diebstahl und Schäden an einem Objekt 100 gezeigt. Die Sensoren 10 werden an einer Seite, bzw. einem hinteren Teil des Objekts 100 befestigt. Ein Detektionsbereich 110 deckt einen seitlichen Bereich vom Objekt 100 ab. Ein Zielobjekt 200 innerhalb des Detektionsbereichs 110 wird durch die Sensoren 10 erkannt und die Zielobjektdaten werden erfasst. Eine Steuereinheit 20 ist am Objekt 100 angeordnet, die die Zielobjektdaten empfängt und eine Risikoklassifikation mittels eines ersten KI-Modells durchführt. Ein Alarmsystem 30, das ebenfalls am Objekt 100 vorgesehen ist, wird von der Steuereinheit 20 angesteuert.

### Bezugszeichenliste

- 1: Verfahren zur Detektion und Prävention von Diebstahl und Schäden an einem Objekt
- 2: Vorrichtung zur Detektion und Prävention von Diebstahl und Schäden an einem Objekt
- 3: Verfahren zum Erzeugen eines Detektionsbereichs eines Sensors um ein Objekt

- 100: Objekt
- 200: Zielobjekt

- 110: Detektionsbereich um das Objekt

- 10: Sensor
- 20: Steuereinheit
- 30: Alarmsystem
- 40: Kommunikationsmodul
- 50: Stromversorgung

## Patentansprüche

1. Verfahren (1) zur Detektion und Prävention von Diebstahl und Schäden an einem Objekt (100), insbesondre an einem Fahrzeug, umfasst:
(S10) Erkennen eines Zielobjekts (200) innerhalb eines Detektionsbereichs (110) durch mindestens einen Sensor (10);
(S20) Erfassen von Zielobjektdaten;
(S30) Übermitteln der Zielobjektdaten an eine Steuereinheit (20);
(S40) Durchführen einer Risikoklassifikation anhand der Zielobjektdaten mittels eines ersten künstliche-Intelligenz (KI)-Modells; und
(S50) Ansteuern eines Alarmsystems (30) gemäß der Risikoklassifikation des Zielobjekts (200).

2. Verfahren (1) nach Anspruch 1, wobei das Verfahren (1) weiter umfasst:
(S11) Bestimmen eines Installationsorts am Objekt (100) zur Installation des Sensors;
(S12) Kalibrieren und/oder Konfigurieren des Sensors (10);
(S13) Anordnen des Sensors (10) an dem Objekt (100); und
(S14) Erzeugen des Detektionsbereichs (110) um das Objekt (100).

3. Verfahren (1) nach einem der vorhergehenden Ansprüche, wobei der mindestens eine Sensor ein Radarsensor und/oder ein optischer Sensor und/oder ein akustischer Sensor und/oder ein Beschleunigungssensor ist.

4. Verfahren (1) nach einem der vorhergehenden Ansprüche, wobei die Zielobjektdaten ein Vorhandensein und/oder eine Position des Zielobjekts (200), und/oder eine Geschwindigkeit und/oder einer Bewegungsrichtung und/oder eine Anzahl des Zielobjekts (200), und/oder eine Tageszeit, und/oder ein Vorhandensein eines auffälligen Gegenstandes an dem Zielobjekt (200) umfassen.

5. Verfahren (1) nach einem der vorhergehenden Ansprüche, wobei auf der Steuereinheit (20) das erste KI-Modell für die Zielobjekterkennung, und/oder die Risikoklassifikation und/oder die Steuerung des Alarmsystems (30) integriert sind.

6. Verfahren nach einem der vorhergehenden Ansprüche, wobei auf dem Sensor (10) ein zweites KI-Modell für die Zielobjekterkennung integriert ist.

7. Verfahren (1) nach einem der vorhergehenden Ansprüche, welches weiter umfasst:
(S60) Hochladen der Zielobjektdaten über ein Kommunikationsmodul (40) in eine Cloud; und
(S70) Trainieren des ersten und/oder zweiten Kl-Modells mittels der Zielobjektdaten.

8. Verfahren (1) nach einem der vorhergehenden Ansprüche, wobei das Alarmsystem (30) ein Leuchtsignal und/oder einen akustischen Alarm und/oder eine Kamera umfasst, und wobei das (S50) Ansteuern des Alarmsystems (30) gemäß der Risikoklassifikation des Zielobjekts (200) Folgendes umfasst:
(S51) Einschalten des Leuchtsignals und/oder des akustischen Alarms und/oder der Kamera; und/oder
(S52) Senden einer Benachrichtigung an eine externe Stelle.

9. Vorrichtung (2) zur Detektion und Prävention von Diebstahl und Schäden an einem Objekt, insbesondre an einem Fahrzeug, umfassend:
Mindesten einen Sensor (10), der konfiguriert ist, ein Zielobjekt (200) innerhalb eines Detektionsbereichs (110) zu erkennen und Zielobjektdaten zu erfassen;
eine Steuereinheit (20), die konfiguriert ist, die Zielobjektdaten zu empfangen und mittels eines ersten KI-Modells eine Risikoklassifikation durchzuführen; und
ein Alarmsystem (30), das gemäß der Risikoklassifikation des Zielobjekts von der Steuereinheit (20) angesteuert wird.

10. Vorrichtung (2) nach Anspruch 9, wobei der Sensor (10) ein Radarsensor und/oder ein optischer Sensor und/oder ein akustischer Sensor und/oder ein Beschleunigungssensor ist.

11. Vorrichtung (2) nach Anspruch 9 oder 10, wobei die Zielobjektdaten ein Vorhandensein und/oder eine Position des Zielobjekts (200), und/oder eine Geschwindigkeit und/oder einer Bewegungsrichtung und/oder eine Anzahl des Zielobjekts (200), und/oder eine Tageszeit, und/oder ein Vorhandensein eines auffälligen Gegenstandes an dem Zielobjekt (200) umfassen.

12. Vorrichtung (2) nach einem der Ansprüche 9 bis 11, wobei das Alarmsystem (30) ein Leuchtsignal und/oder einen akustischen Alarm und/oder eine Kamera umfasst.

13. Vorrichtung (2) nach einem der Ansprüche 9 bis 12, wobei die Vorrichtung (2) eine eigene Stromversorgung (50), bevorzugt eine Batterie oder einen Akku, umfasst.

14. Vorrichtung (2) nach einem der Ansprüche 9 bis 13, wobei auf der Steuereinheit (20) das erste KI-Modelle für die Zielobjekterkennung, und/oder die Risikoklassifikation und/oder die Steuerung des Alarmsystems (30) integriert sind.

15. Vorrichtung (2) nach einem der Ansprüche 9 bis 14, wobei auf dem Sensor (10) ein zweites KI-Modell für die Zielobjekterkennung integriert ist.

16. Vorrichtung (2) nach einem der Ansprüche 9 bis 15, wobei die Vorrichtung (2) ein Kommunikationsmodul (40) umfasst, über das die Zielobjektdaten in eine Cloud zum Trainieren des ersten und/oder des zweiten KI-Modells hochgeladen werden.

17. Verfahren (3) zum Erzeugen eines Detektionsbereichs (110) eines Sensors (10) um ein Objekt (100), insbesondre um ein Fahrzeug, umfassend:
(S11) Bestimmen eines Installationsorts am Objekt (100) zur Installation des Sensors (10);
(S12) Kalibrieren und Konfigurieren des Sensors (10);
(S13) Anordnen des Sensors (10) an dem Objekt (100); und
(S14) Erzeugen des Detektionsbereichs (110) um das Objekt (100);
wobei der Sensor vorzugsweise ein Radarsensor ist.

18. Prozessor, der konfiguriert ist, um ein Verfahren (1) zur Detektion und Prävention von Diebstahl und Schäden an einem Objekt, insbesondre an einem Fahrzeug, durchzuführen, wobei das Verfahren (1) Folgendes umfasst:
(S10) Erkennen eines Zielobjekts (200) durch mindestens einen Sensor (10);
(S20) Erfassen von Zielobjektdaten;
(S30) Übermittelung der Zielobjektdaten an eine Steuereinheit (20);
(S40) Durchführen einer Risikoklassifikation anhand der Zielobjektdaten und mittels eines ersten KI-Modells; und
(S50) Ansteuern eines Alarmsystems (30) gemäß der Risikoklassifikation des Zielobjekts (200).
